# EUROPEAN PATENT SPECIFICATION

(11) **EP 1 344 354 B1**
(45) Date of publication and mention of the grant of the patent: **23.07.2008**
(21) Application number: 01985458.7
(22) Date of filing: 20.12.2001
(51) Int. Cl.: H04L 12/56

(54) **SELECTING DATA PACKETS**
VORWÄHLEN DER DATEN-PAKETE
SELECTION DE PAQUETS DE DONNEES

(30) Priority: 22.12.2000 GB 0031536
(43) Date of publication of application: 17.09.2003
(73) Proprietor: Nokia Corporation, 00045 Espoo (FI)
(72) Inventor: RUUTU, Jussi, FIN-02210 Espoo (FI); SUOKNUUTI, Marko, FIN-00180 Helsinki (FI)
(74) Representative: Style, Kelda Camilla Karen
(86) International application number: PCT/IB2001/002817
(87) International publication number: WO 2002/052801

(56) References cited:
- EP-A- 0 720 321
- EP-A- 1 028 593
- WO-A-00/62506
- US-A- 5 629 936

## Description

The present invention relates to methods and apparatus for selecting a data unit to drop from a plurality of data streams each comprising a plurality of data units.

A communication system may provide the user, or more precisely, user equipment or terminal, with connection-orientated communication services and/or connectionless communication services. An example of the first type is a circuit switched connection where a circuit is set-up with call set-up and admission control. An example of a connectionless communication service is a so called packet switched service which is typically used in communications based on the internet protocol (IP). Both of the circuit switched and packet switched services can be used for communicating packet data. Packet data services can be defined in general as services that are capable of transporting data units (data packets or similar data entities of fixed and/or variable length) between two signaling points, such as between two terminals or other nodes of the communication system. Successive data packets may be transferred in data streams (or flows) between source and receiver nodes.

A network which is capable of transporting data units or data entities between two or more nodes is referred to in the following as a data network. The data network may be a communication network based upon use of a fixed line or wireless communication media. The wireless connection may be used only for a part of the connection between the two nodes. A TCP/IP (Transfer Control Protocol / Internet Protocol) based data network is mentioned herein as an example of a packet switched data network. An ATM (Asynchronous Transfer Mode) based communication network is an example of a circuit switched data network to which embodiments of the invention could be applied. Examples of communication networks that are capable of providing wireless services, such as IP or ATM/AAL2 (Asynchronous Transfer Mode / ATM Adaptation Layer Type 2) based packet data transmissions, include, without limiting to these, GSM (Global System for Mobile Communication) GPRS (General Packet Radio Service) networks, EDGE (Enhanced Data Rate for GSM Evolution) mobile data network and third generation telecommunication systems such as CDMA (Code Division Multiple Access) or TDMA (Time Division Multiple Access) based third generation telecommunication systems that are sometimes referred to as Universal Mobile Telecommunication System (UMTS), and IMT 2000 (International Mobile Telecommunication System 2000). All of the above systems can transfer data to and from mobile stations or similar mobile equipment providing the user thereof with a wireless interface for the date transmission.

Communication traffic can become congested at network nodes if the data is received at a node at a rate greater than the maximum data throughput rate at that node. Typically, congestion occurs at a node when the node has a' lower data throughput rate than the node which precedes it in the same direction or flow. Similarly, congestion occurs when a node receives data from a plurality of data sources and the sum of the input data rates exceeds the data throughput of the node.

Currently, IP networks used the "Best effort" model where no guarantees about packet loss or transfer delay are made. Packet loss occurs at the buffers of an IP router. In the best effort model, the output buffers of an IP router are typically first in first out (FIFO) kind of queues. If a buffer becomes full then new IP packets are simply dropped regardless of their origin or the flow that they belong to. From the users point of view packet drops occur randomly.

One method of network management uses a Quality of Service (QoS) approach. The Internet Engineering Taskforce (IETF) has recently standardized a QoS approach called Differentiated Services (DiffServ). In the DiffServ model IP packets have six bits in the packet header called DiffServ codepoint (DSCP), that indicates how an IP router should handle a packet. More specifically the DiffServ codepoint can indicate the priority of the packet. Thus the DiffServ model allows relative QoS. Different marked packets can receive a different priority in queuing and/or scheduling of nodes (so caller per-hop behaviour). In the DiffServ case, the packets are not dropped randomly but based upon their DiffServ codepoints. Thus it is possible to start to discard for example low priority IP packets before the buffers of an IP router are completely full. This leaves buffer space for higher priority packets that do not necessarily see any congestion at all from their point of view.

It is possible to enhance best effort with early dropping schemes. For example, Random Early Detection (RED) is a queuing method that includes random packet dropping already before the buffer is completely full. This improves the operation of the TCP protocol.

Random Early Detection (RED) can be used in conjunction with the best effort method. With RED random packet dropping will occur before the buffer is completely full. One drop scheme which may be used with embodiments of the invention is the "DropTail" technique according to which packets arriving at a full buffer are dropped. A number of variations of the "DropTail" technique may have also been proposed. An example of such a variation is the "DropFront" technique in which packets are dropped at the start of the buffer when they arrive at a full buffer. An example of another approach is the "Early Random Drop" (ERD) technique in which all arriving packets are dropped with a fixed probability if the queue length of the buffer exceeds a predetermined threshold.

Many network applications can tolerate some level of packet losses. Often an application can handle losses that are well separated in time. However, consecutive lost packets may cause severe problems. For example, many speech codecs can handle relatively easily one lost IP packet by re-playing the last successfully received speech frame. However, in the absence of several consecutive speech frames, the speech codec cannot prevent the end user from noticing the degraded quality of the voice connection.

Thus one problem is that with best effort or DiffServ models it is possible that this kind of multiple lost IP packets of the same data stream can occur.

It is an aim of embodiments of the present invention to at least partly mitigate the above-mentioned problem.

US 5629936 describes a circuit and method for optimal packet dropping to control average packet gap in a buffer. When a packet is dropped from the buffer, a buffer position pointer is updated to indicate the buffer position of the next packet to be dropped should an overflow occur.

EP 1028593 discloses a method and apparatus for manipulating a digitally compressed video bitstream. In one embodiment, when a packet is dropped from a frame, a packet that does not overlap the same spatial region in the next frame is dropped.

EP 0720321 describes an apparatus and method for reducing the runlength of dropped packets in multiple access communication systems. That document mentions circular interleaving which is used to spread dropped packets over many system users.

According to a first aspect of the present invention there is provided a method of selecting a data unit to be dropped from a plurality of data streams, each comprising a plurality of data units, said method comprising the steps of identifying a first data unit dropped from a first data stream, storing information relating to said first unit, and selecting a second data unit to be dropped, said selection step using said stored information so that said second data unit is not consecutive to said first data unit in said first stream.

Preferably the second data unit is selected from a data stream other than said first data stream.

Conveniently the method further comprises the steps of storing information for a plurality of dropped units and using said information relating to the plurality of dropped units in said selecting step.

Advantageously each data unit occupies a successive time slot in its associated data stream and respective time slots in each data stream are substantially cotemporaneous. In addition the method further comprises the steps of selecting at least one data unit to be lost for each successive time slot.

According to a second aspect of the present invention there is provided a method for controlling a data unit to be dropped from a plurality of data streams, each stream comprising a plurality of units, said method comprising identifying at least one data unit dropped from said at least one of said streams, storing information relating to said dropped data units, and selecting at least one subsequent data unit to be dropped in dependence on said stored information.

According to a third aspect of the present invention there is provided a data unit selection apparatus for selecting a data unit to be dropped from a plurality of data streams each comprising a plurality of data units, said apparatus comprising identifying means for identifying a first data unit dropped from a first data stream, storage apparatus for storing information relating to said first, data unit, and selection means for selecting a second data unit to be dropped in response to said stored information so that said second data unit is not consecutive to said first data unit in said first data stream.

According to a fourth aspect of the present invention there is provided a method of selecting a data unit to be dropped from a plurality of data streams, each comprising a plurality of data units, said method comprising the steps of identifying a first data unit dropped from a first data stream, storing information relating to said first unit, and selecting a second data unit to be dropped, said selection step using said stored information so that said second data unit is not within a predetermined number of successive data units to said first data unit in said first stream.

According to a fifth aspect of the present invention there is provided a data unit selection apparatus for selecting a data unit to be dropped from a plurality of data streams each comprising a plurality of data units, said apparatus comprising identifying means for identifying a first data unit dropped from a first data stream, storage apparatus for storing information relating to said first data unit, and selection means for selecting a second data unit to be dropped in response to said stored information so that said second data unit is not within a predetermined number of successive data units to said first data unit in said first data stream.

Embodiments of the present invention thus ensure that loss of consecutive data packets from a single data stream does not occur. This has the benefit of, amongst other things, enabling a speech codec to replay the last data packet from the data stream when a data packet is lost. This can mean that the required quality may be maintained.

For a better understanding of the present invention reference will now be made by way of example only to the accompanying drawings, in which:
Figure 1 shows schematically a partial telecommunication network;
Figure 2 schematically shows a router;
Figure 3 shows data packets being dropped from four concurrent data streams; and
Figure 4 illustrates the decision tree for a method embodying to the present invention.

In the description like reference numerals refer to like parts.

In this description a (data) packet or other data unit is a sequence of bits which is typically consecutive. In a data unit the sequence of bits are defined according to the protocol of the data unit. A data stream (or flow) is a sequence of data units such as the data packets that can be categorized according to a well-known criteria, such as source-destination-protocol-ports tuplets (IPv4) or flow identifier (IPv6). The data units in a flow may be consecutive. To give an example, two packets p₁ and p₂ belong to the same flow. The packets p₁ and p₂ can be multiplexed with packets q of another flow. The packets p₁ and p₂ may also be head to tail in the time domain but are still distinguishable as two different packets. This means that packet p₁ and p₂ cannot be considered as one single packet, even though the consecutive bits belong to the same flow. A data entity or unit may have a variable length. (e.g. Internet Protocol data packets) or a fixed length (e.g. ATM cells). In the context of embodiments of the present invention "data" can include voice information as well as or instead of for example conventional data packets.

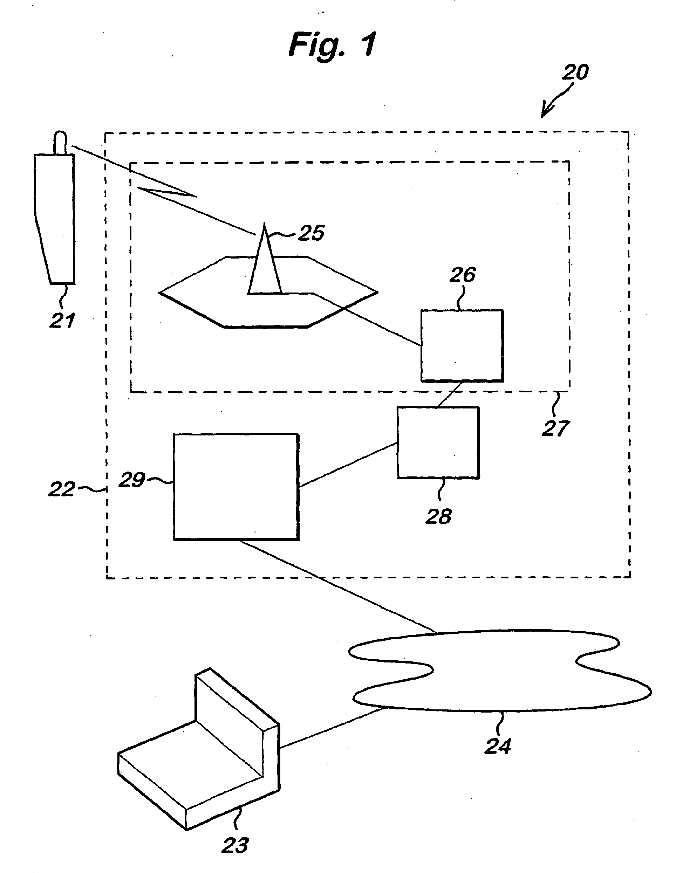

Figure 1 shows a communication system 20 that provides data communication resources embodying the present invention. The communication system is capable of providing wireless data transportation services for a mobile station 21 thereof by means of a public land mobile network (PLMN) 22. Another user 23 is provided with fixed line data services by means of a data network 24. An example of a data network environment where embodiments of the invention may be applied is a server network where data is retrieved from different servers. It should be appreciated that while embodiments of the invention mentioned herein are described in the context of a UMTS (Universal Mobile Telecommunications System) and an Internet Protocol (IP) network, other embodiments of the present invention are applicable to any packet- and cell switched/routed network, independent of transport layer technology, and independent of the architecture (connection-oriented or connectionless) of the.system.

The mobile station 21 or other appropriate user equipment is arranged to communicate via the air interface with a base transceiver station 25 of an access entity of the PLMN system 22. It should be appreciated that the term mobile station is intended to cover any suitable type of wireless user equipment, such as portable data processing devices or web browsers as well as mobile telephones or computers. The term "base station" will be used in this document to encompass any element which transmit to and/or receive from wireless stations or the like via the air interface.

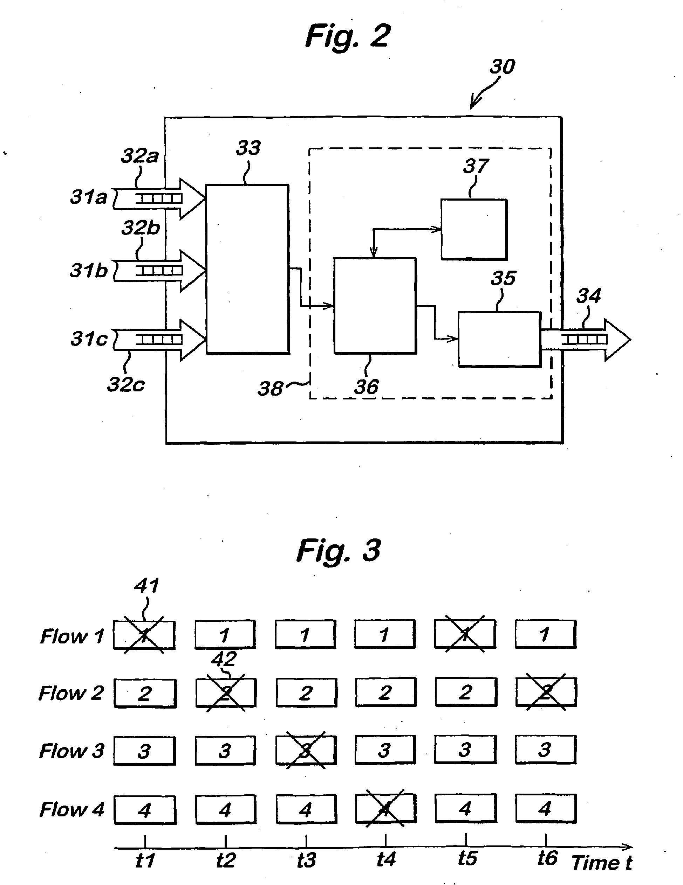

The base station 25 is controlled by a radio network controller RNC 26. The radio network controller 26 and the base station 25 belong to a radio network subsystem RNS 27 of a radio access network RAN (e.g. a UTRAN: UMTS Terrestrial RAN). It should be appreciated that a UMTS radio access network is typically provided with more than one radio network controller, and that each radio network controller is arranged generally to control more than one base station 25 although only one base station is shown in Figure 2.

The radio network subsystem 27 is connected to the core network of the PLMN system, e.g. to a SGSN (serving GPRS support node) 28. The SGSN 28 keeps track of the mobile stations location and performs security functions and access control. The SGSN 28 is connected to a GGSN (gateway GPRS support node) 29. The GGSN 29 provides interworking with the other data network 24. The GGSN 29 acts as a gateway between the UMTS network 22 and the other data network 24, which in this example is an IP based data network. The PLMN might also include a home location register (HLR).

Another user terminal 23 is shown connected to the data network 24. The exemplifying arrangement is such that the mobile station 21 and the terminal 23 may communicate via the data networks 22 and 24. However, it should be appreciated that embodiments of the invention may be applied to other types of data communication arrangements as well, such as to an arrangement where the user 21 (or 23) communicates with an element that is implemented within the network 22 (or 24) or to an arrangement where two elements of the network 22 (or 24) communicate data internally within the network.

Although not shown, the data communication system of Figure 1 may also be connected to conventional telecommunications networks, such as to a GSM based cellular public land mobile network (PLMN) or to a public switched telephone network (PSTN). The various networks may be interconnected to each other via appropriate interfaces and/or gateways.

In use, the communication system of Figure 1 can carry various types of communication traffic, including packets of TCP/IP traffic. The nodes of the communication system negotiate for network resources in order to optimize the capacity and performance of the communication network. The mobile station 21 the Radio network controller RNC, the serving GPRS support node 28 and the gateway GPRS support node 29 negotiate a bearer characterized by a quality of Service (QoS) profile.

For example, UMTS quality of service parameters define classes such as "conversational", "interactive", and "background". These classes have different requirements in terms of for example maximum allowed delay jitter and packet loss tolerances. The maximum throughput rate of a packet is related to maximum allowed bit rate and thus also to the speech code bit rate used. On the other hand in GPRS, quality of service profiles may be defined according to for example precedence class, delay class, reliability class, mean (or peak) throughput class. The precedence class indicates the importance attached to the PDP context by the network operator. The delay class indicates the delay tolerance of a packet. The reliability class indicates the maximum number of packets which may be lost. The mean (or peak) throughput class is derived from the negotiated mean (or peak) throughput for the PDP context in question.

Maximum throughput rate parameters are typically based on policing and the shaping functions performed at the gateway GPRS support node 29 and/or other considerations. Therefore packets being transferred in the downlink direction may be dropped at the gateway GPRS support node 29 and/or the serving GPRS support node 28 if the data packet rate exceeds the maximum throughput negotiated.

In addition, a radio link between a base station and a mobile station has a fluctuating data throughput capacity which depends on, for example, link quality and the demand for retransmission of packets. Therefore packets being transferred in the downlink direction may also be dropped at the radio network controller RNC (e.g. if the capacity of the radio link is not sufficient to sustain the required throughput rate). It is also possible for the serving GPRS support node 28 to become overloaded. Thus, in the embodiment of Figure 2 the radio network controller RNC, the serving GPRS support node 28 and the gateway GPRS support node 29 each comprise congestion control means which provide a predetermined level of buffering according to a predefined set of rules as will be explained below. In other embodiments, not all of the network nodes 26, 28 and 29 are provided with congestion control means.

Figure 2 shows a simplified view of an IP router 30 according to an embodiment of the present invention. The router could be located at any one (or more) of the nodes of Figure 1 and can be used to route data streams through the telecommunication network. For the sake of clarity Figure 2 shows packet transfer in one direction (the downlink direction) only. In general, the router may include for example some input or output buffering.

The router 30 has three inputs: 31a, 31b and 31c. Each input receives a respective data stream 32a, b and c including successive data packets 15. The data packets 15 entering the router 30 are subject to a routing decision in routing unit 33. The routing unit 33 provides the routing functions of an IP router. The router selects which of the outputs of the router 30 any particular input flow will be routed through. Only one output 34 is illustrated as will be described below. It will be understood that the router may have many more outputs and the number is not necessarily linked to the number of inputs 31.

Once an output 34 has been selected the IP packet is forwarded towards the output buffer 35. Using the QoS approach DiffServ before actual buffering in the output buffer 35 a decision is made whether the packet is to be buffered or dropped. This choice (or selection) is made in the drop unit 36. The drop unit 36 may be omitted in some embodiments of the invention or may be used to make a drop or buffer decision using criteria other than the 'Diffserv criteria'. For example, a random early detection scheme may be used which allows packet dropping before the actual buffer(s) is/are full.

Effectively, local conditions, such as the occupancy level of buffer(s) are first checked together with the DiffServ code point carried in the IP packet header. If the packet treatment instructions (so called per-hop-behaviour or PHB) indicates that the packet is considered important enough, the packet is taken to the buffering system. Otherwise the packet can be dropped. The buffering system can consist of one or more actual queues. In general it is also possible to discard a packet that has already once been buffered successfully. In this case, the drop decision is reconsidered.

Embodiments of the present invention include a device or functionality called drop history unit 37 which records the drop history. For example, the history can consist of data related to only the last dropped IP packet or it may be an extensive database containing a long history. When an IP packet is dropped this action is recorded. The record may consist of various information of the IP packet. In the general case any part of the IP packet header or payload may be recorded. However, the record may also consist of a single piece of information for example a senders IP address. The drop unit 36, drop history unit 37 and an output buffer 35 form the output portion 38 or the router 30.

According to embodiments of the present invention the drop unit 36 takes into account the drop history when making a drop decision. For example it may not drop the IP packet if the previous dropped IP packet belongs to the same flow. This will distribute the packet loss caused by network congestion to several flows (or data streams) and make sure that no single flow sees multiple consecutive lost packets.

Figure 3 illustrates four voice over IP (VoIP) flows (flows 1, 2, 3 and 4) which enter an IP router and are routed to the same output. In this example, we assume that there does not exist any other traffic and that the four VoIP flow have the same DiffServ classifications. We also assume that each of the flows contain one IP packet in one time unit (see the x-axis) but the output link capacity is only enough for three IP units per unit time. This means that one IP packet must be selected to be dropped at each time interval. In systems which do not embody the present invention, the packet to be dropped would be selected only based upon the order that the packets from the four flows arrives during one time unit. In the worst case, this means that a single flow would see most of the packets lost. Even allowing for some random transport time (or random delays in the IP router network) it is likely that these four flows would be synchronized so that one of the flows would see multiple consecutively dropped packets.

Embodiments of the present invention provide that the flow which has suffered the last dropped package is recorded in the drop history unit 37. The flow can be identified using, for example, the senders IP address. When the drop unit makes its decision about the packet to be dropped, it does not select the flow which is marked with the last dropped packet. Instead another flow is selected. This means that instead of multiple consecutively lost packets each flow sees only one single dropped packet and the application performance is improved.

In alternative embodiments of the invention, the drop unit may permit consecutive packets to be dropped from the same flow, in dependence on the given flow. This is controlled by rules associated with a given flow in conjunction with the drop history.

Referring to Figure 3, in the first time unit t₁ flow 1-is selected to have its data packet 41 lost. In this way data packets from the three remaining flows (flows 2, 3 and 4) in the corresponding time slot can be buffered and subsequently output through the output which as described above has the capacity to output three concurrent data packets. The drop history unit 37 is then updated with details of the flow (flow 1) from which the last data packet was lost. In the next time slot t₂ the records in the drop history unit is/are consulted when a data packet needs to be dropped. This precludes data packets being dropped from flow 1. As illustrated flow 2 is selected for losing a data packet 42 in time slot t₂. The drop history unit is thereafter updated. In this way the loss of consecutive data packets in a successive data stream can be avoided. As an alternative the router could be arranged so that data units within a predetermined number of data units from the last dropped data unit are not selected to be dropped.

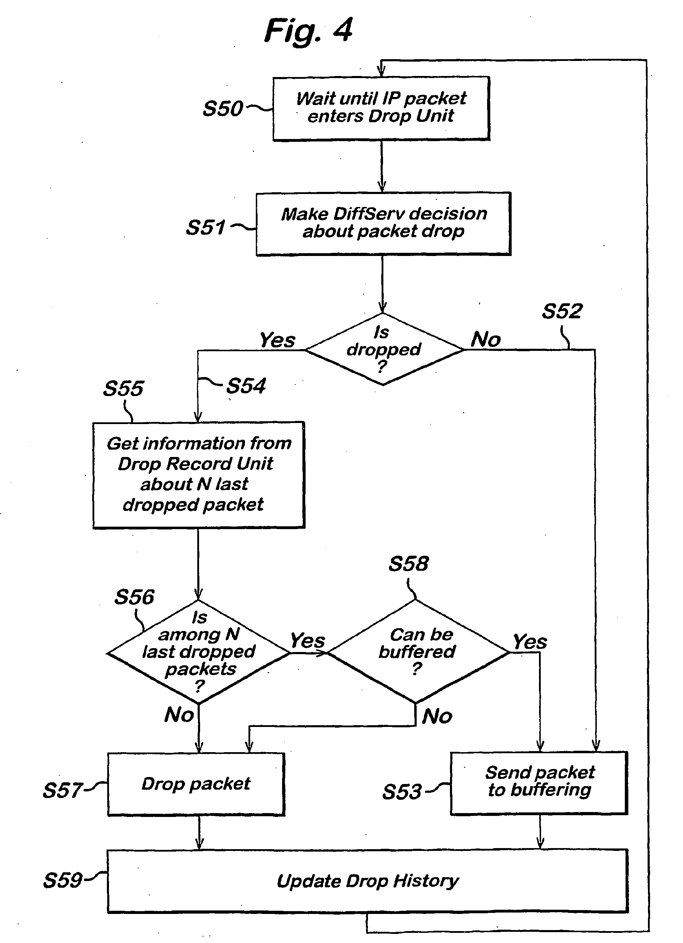

Figure 4 illustrates a flow chart showing the steps performed in the drop unit. In the first step S50, an IP data packet enters the drop unit. In the next step S51, the unit makes its normal decision about buffering or dropping the IP packet using the DiffServ criteria. It is thus determined if the packet is a candidate to be dropped. If it is determined that the packet is not to be dropped in step S52 the packet selected for buffering is sent by the drop unit in step S52 to the buffering system.

If it is determined that the packet is selected for dropping in step S54, then the drop unit 36 requests in the next step S55 from the drop history unit 37 the information about the last dropped packets. The drop unit checks whether the data packet to be dropped is among the last N packets in step S56. N can be between 1 (representing keeping a record of only the last dropped data packet) or many representing a record for some or all dropped data packets. If none of these records matches the current packet to be dropped, then the IP data packet is dropped in step S57. If there is a match, then it is checked to see if there is space left free in the buffering system in step S58. This check can be simple or more sophisticated. For example, it is possible to check if there is any free space left or alternatively there could be some more complicated algorithm that takes into account several parameters such as expected usage of the buffers. If there is free space available then the packet is forwarded to the buffering system and buffered in S53. Otherwise, the packet is dropped in step S57. Finally at the end of the cycle the drop history is updated S59 before returning to wait for the next IP packet.

There are several ways to maintain an update the records of the dropped packet. For example, the record can consist of the copy of the IP header of the last dropped packet and of a bit mask. The bit mask indicates which part(s) of the IP header are used for identifying the flow. For example, the mask can indicate that the IP source and IP destination addresses are used to identify the flow. When drop unit makes the decision about the next packet to be dropped it checks if the candidate packet has the same IP source and destination address as the last dropped IP packet. If the answer is yes, then the packet is not dropped but the next IP packet maybe selected (again if not belonging to the last dropped flow). The updating of drop history may also be implemented in several ways. For example the mask corresponding to the buffered packet may be extracted and stored. In alternative embodiments of the invention, the drop history is maintained e.g. by having a queue of flow identifiers (comprising e.g. source address or address prefix, source port, destination address prefix, differentiated services codepoint etc.) identifying the flows from which packets have been dropped in recent history. Whenever a packet from a flow, is dropped, the flow identifier is added to the queue. When dropping packets, the drop unit checks the queue for flows from which the candidate packets for dropping are. The drop unit will avoid dropping packets from all or at least some of the flows identified in the drop history queue.

One benefit of embodiments of the present invention is that it is possible to make sure that the packet loss is distributed as evenly as possible among different flows (or end user applications). This means that a single application flow sees zero or at least a decreased number of consecutively lost IP packets and the performance is thus improved.

Embodiments of the present invention may be used where two or more packets are to be dropped at the same time.
Embodiments may also be provided in which it is assured that the second data unit is not within a predetermined number of successive data units of the first lost data unit. That is within the data stream there is at least a given amount of data units between the first and second data units.

Embodiments may be implemented independently of the type of the used transport protocol and at any desired node. It should also be appreciated that whilst embodiments of the present invention have been described in relation to wireless user equipment embodiments of the present invention are applicable to any other suitable type of user equipment.

Embodiments of the present invention have been described in the context of wireless telecommunications network. Embodiments of the present invention can be used in any network, wireless or otherwise where a plurality of flows of data units pass through a node with a limited capacity.

Embodiments of the present invention have been described in the context of a DiffServ architecture. Embodiments of the present invention may be used with a best effort model or indeed any other suitable model. Additional drop schemes such as RED or any other scheme may be used in conjunction with Diffserv the best effort model or any other model.

It is also noted herein that whilst the above described is one exemplifying embodiment of the invention there are several variations and modifications which may be made to the disclosed solution without departing from the scope of the present invention as defined in the appended claims.

## Claims

1. A method of selecting a data unit (42) to be dropped from a plurality of data streams (32a, 32b, 32c) which are to be multiplexed each data stream comprising a plurality of data units (15, 41, 42), said method comprising the steps of:
identifying a first data unit (41) dropped from a first data stream;
storing information relating to said first unit; and selecting a second data unit (42) to be dropped, said selection step using said stored information so that said second data unit (42) is selected from a data stream other than said first data stream such that said second data unit (42) is not consecutive to said first data unit (41) in said first stream.

2. A method according to claim 1 further comprising the steps of:
storing information for a plurality of dropped units (41, 42) and using said information relating to the plurality of dropped units (41, 42) in said selecting step.

3. A method according to claims 1 or 2 wherein each data unit (41, 42) occupies a successive time slot (t1, t2) in its associated data stream and respective time slots (t1, t2) in each data stream are substantially cotemporaneous, said method further comprising the steps of:
selecting at least one data unit (42) to be lost for each successive time slot (t1, t2).

4. A method according to any one of claims 1 to 3 further comprising the steps of:
consecutively storing said successive data units (41) of at least one data stream (32a, 32b, 32c) in a data store (37); and
selecting at least one data unit (42) to be dropped when said data store (37) is full and a new data unit requires storing therein.

5. A method according to any one of claims 1 to 4 further comprising the steps of:
consecutively storing said successive data units (41) of at least one data stream (32a, 32b, 32c) in a data store (37); and

6. A method according to any preceding claim further comprising the steps of:
when a data packet must be lost selecting the second data packet (42) from a pre-determined data stream (32a, 32b, 32c).
selecting at least one data unit (42) to be dropped before said data store (37) is full and a new data unit requires storing therein.

7. A method according to any preceding claim further comprising the steps of:
determining a priority of each of said plurality of data streams (32a, 32b, 32c);
selecting a unit (42) to be dropped taking into account the priority of data streams (32a, 32b, 32c).

8. A method as claimed in any preceding claim, wherein said selection step causes a data unit (42) to be lost from each of said data streams consecutively (32a, 32b, 32c).

9. A method according to any preceding claim wherein each data unit (15, 41, 42) comprises a packet header including a plurality of bits which indicate how the data unit (15, 41, 42) should be routed through a router (30) in a telecommunication system.

10. A method as claimed in any preceding claim, wherein said data unit (15, 41, 42) comprises a data packet.

11. A method according to any preceding claim wherein said information comprises a portion of a senders address.

12. A method according to claim 10 or claim 11 wherein said information comprises a part of a packet header.

13. A method according to any one of claims 10 to 12 wherein said information comprises a part of a packet header and some other identifiers obtained by analyzing the packet.

14. A method according to any one of claims 10 to 13 wherein said information comprises an identifier obtained by analyzing the packet.

15. A method according to any preceding claim wherein said information comprises information identifying the stream (32a, 32b, 32c) from which the data unit has been dropped:

16. A data unit selection apparatus for selecting a data unit (42) to be dropped from a plurality of data streams (32a, 32b, 32c) which are to be multiplexed, each data stream comprising a plurality of data units (15, 41, 42), said apparatus comprising:
identifying means for identifying a first data unit (41) dropped from a first data stream;
storage apparatus (37) for storing information relating to said first data unit (41); and
selection means for selecting a second data unit (42) to be dropped in response to said stored information so that said second data unit (42) is selected from a data stream other than said first data stream such that said second data unit (42) is not consecutive to said first data unit (41) in said first data stream.

17. Apparatus according to claim 16 further comprising:
a buffer (35) including memory means in which data units (41, 42) can be stored; whereby
data units (41, 42) are selectively lost when said memory means is full.

18. Apparatus according to claim 16 or claim 17 further comprising:
a buffer (35) including memory means in which data units (41, 42) can be stored; whereby
data units (41, 42) are selectively lost before the memory means is full.

19. Apparatus according to any one of claims 16 to 18 wherein each data stream (32a, 32b, 32c) comprises a communication link between a sender and a receiver in a telecommunication system.

20. Apparatus according to any one of claims 16 to 19 wherein said information comprises a portion of a senders address.

21. Apparatus according to any one of claims 16 to 21 wherein each data unit (41, 42) comprises a packet header including a plurality of bits which indicate how the data unit should be routed through a router (30) in a telecommunication system.

22. Apparatus according to any one of claims 16 to 21 wherein the information stored by the storage apparatus (37) includes at least data that can be used to identify the data stream (32a, 32b, 32c) from which the first data unit (41) is dropped.

23. Apparatus according to any one of claims 16 to 22 wherein the information stored by the storage apparatus (37) includes a portion of a packet header.

## Patentansprüche

1. Auswahlverfahren für eine aus einer Vielzahl von zu multiplexender Datenströmen (32a, 32b, 32c) zu verwerfende Dateneinheit (42), wobei jeder Datenstrom eine Vielzahl von Dateneinheiten (15, 41, 42) umfasst, wobei das Verfahren die Schritte aufweist:
Identifizieren einer ersten aus einem ersten Datenstrom verworfene Dateneinheit (41);
Speichern von Informationen, welche die erste Dateneinheit betreffen; und
Auswählen einer zweiten zu verwerfenden Dateneinheit (42), wobei der Auswahlschritt die gespeicherten Informationen so verwendet, dass die zweite Dateneinheit (42) aus einem anderen Datenstrom als dem ersten Datenstrom ausgewählt wird, dass die zweite Dateneinheit (42) nicht der ersten Dateneinheit (41) in dem ersten Datenstrom nachfolgend ist.

2. Verfahren gemäß Anspruch 1, weiter umfassend den Schritt:
Speichern von Informationen für eine Vielzahl von verworfenen Einheiten (41, 42) und Verwenden der sich auf die Vielzahl von verworfenen Einheiten (41, 42) beziehenden Informationen im Auswahlschritt.

3. Verfahren gemäß Anspruch 1 oder 2, wobei jede Dateneinheit (41, 42) einen nachfolgenden Zeitschlitz (t1, t2) in ihrem zugeordneten Datenstrom belegt und jeweilige Zeitschlitze (t1, t2) in jedem Datenstrom im Wesentlichen zeitgleich sind, wobei das Verfahren weiter die Schritte umfasst:
Auswählen wenigstens einer Dateneinheit (42), die für jeden folgenden Zeitschlitz (t1, t2) zu verlieren ist.

4. Verfahren gemäß einem der Ansprüche 1 bis 3, weiter umfassend die Schritte:
fortlaufendes Speichern der aufeinanderfolgenden Dateneinheiten (41) von wenigstens einem Datenstrom (32a, 32b, 32c) in einem Datenspeicher (37); und
Auswählen wenigstens einer zu verwerfenden Dateneinheit (42), wenn der Datenspeicher (37) voll ist und eine neue Dateneinheit ein Speichern darin erfordert.

5. Verfahren gemäß einem der Ansprüche 1 bis 4 weiter umfassend die Schritte:
fortlaufendes Speichern der aufeinanderfolgenden Dateneinheiten (41) von wenigstens einem Datenstrom (32a, 32b, 32c) in einem Datenspeicher (37); und
Auswählen wenigstens einer zu verwerfenden Dateneinheit (42), bevor der Datenspeicher (37) voll ist und eine neue Dateneinheit ein Speichern darin erfordert.

6. Verfahren gemäß einem der vorhergehenden Ansprüche, weiter umfassend die Schritte:
wenn eine Dateneinheit zu verlieren ist, Auswählen des zweiten Dateneinheit (42) aus einem vorbestimmten Datenstrom (32a, 32b, 32c).

7. Verfahren gemäß einem der vorhergehenden Ansprüche, weiter umfassend die Schritte:
Bestimmen einer Priorität jedes der Vielzahl von Datenströmen (32a, 32b, 32c);
Auswählen einer zu verwerfenden Einheit (42), wobei die Priorität des Datenstroms (32a, 32b, 32c) berücksichtigt wird.

8. Verfahren gemäß einem der vorhergehenden Ansprüche, wobei der Auswahlschritt bewirkt, dass eine Dateneinheit (42) aus jedem der Datenströme (32a, 32b, 32c) fortlaufend zu verlieren ist.

9. Verfahren gemäß einem der vorhergehenden Ansprüche, wobei jede Dateneinheit (15, 41, 42) einen Paketkopf umfasst, der eine Vielzahl von Bits enthält, die anzeigen, wie die Dateneinheit (15, 41, 42) durch einen Router (30) in einem Telekommunikationssystem geleitet werden soll.

10. Verfahren gemäß einem der vorhergehenden Ansprüche, wobei die Dateneinheit (15, 41, 42) ein Datenpaket umfasst.

11. Verfahren gemäß einem der vorhergehenden Ansprüche, wobei die Informationen einen Teil einer Senderadresse umfassen.

12. Verfahren gemäß Anspruch 10 oder 11, wobei die Informationen einen Teil eines Paketkopfes umfassen.

13. Verfahren gemäß einem der Ansprüche 10 bis 12, wobei die Informationen einen Teil eines Paketkopfs und einige andere durch Analysieren des Pakets erhaltene Kennungen umfassen.

14. Verfahren gemäß einem der Ansprüche 10 bis 13, wobei die Informationen eine durch Analysieren des Pakets erhaltene Kennung umfassen.

15. Verfahren gemäß einem der vorhergehenden Ansprüche, wobei die Informationen den Strom (32a, 32b, 32c), aus dem die Dateneinheit verworfen wurde, identifizierende Informationen umfassen.

16. Dateneinheitsauswahleinrichtung zum Auswählen eine zu verwerfenden Dateneinheit (42) aus einer Vielzahl von zu multiplexender Datenströmen (32a, 32b, 32c), wobei jeder Datenstrom eine Vielzahl von Dateneinheiten (15, 41, 42) umfasst, wobei die Einrichtung umfasst:
Identifizierungsmittel zum Identifizieren einer ersten aus einem ersten Datenstrom verworfenen Dateneinheit (41),
eine Speichereinrichtung (37) zum Speichern von die erste Dateneinheit (41) betreffenden informationen; und
Auswahlmittel zum Auswählen einer zu verwerfenden zweiten Dateneinheit (42), in Reaktion auf die gespeicherten Informationen derart, dass die zweite Dateneinheit (42) aus einem anderen Datenstrom als den ersten Datenstrom ausgewählt wird, dass die zweite Dateneinheit (42) nicht der ersten Dateneinheit (41) in dem ersten Datenstrom nachfolgend ist.

17. Einrichtung gemäß Anspruch 16 weiter umfassend:
einen Zwischenspeicher (35), der Speichermittel enthält, in denen Dateneinheiten (41, 42) gespeichert werden können, womit
Dateneinheiten (41, 42) selektiv verloren werden, wenn die Speichermittel voll sind.

18. Einrichtung gemäß Anspruch 16 oder Anspruch 17 weiter umfassend:
einen Zwischenspeicher (35), der Speichermittel enthält, in denen Dateneinheiten (41, 42) gespeichert werden können; womit
Dateneinheiten (41, 42) selektiv verloren werden, bevor die Speichermittel voll sind.

19. Einrichtung gemäß einem der Ansprüche 16 bis 18, wobei jeder Datenstrom (32a, 32b, 32c) eine Kommunikationsverbindung zwischen einem Sender und einem Empfänger in einem Telekommunikationssystem umfasst.

20. Einrichtung gemäß einem der Ansprüche 16 bis 19, wobei die Informationen einen Teil einer Senderadresse umfassen.

21. Einrichtung gemäß einem der Ansprüche 16 bis 20, wobei jede Dateneinheit (41, 42) einen Paketkopf umfasst, der eine Vielzahl von Bits enthält, die anzeigen, wie die Dateneinheit durch einen Router (30) in einem Telekommunikationssystem geleitet werden soll.

22. Einrichtung gemäß einem der Ansprüche 16 bis 21, wobei die Informationen, die durch die Speichereinrichtung (37) gespeichert wurden, wenigsten Daten enthalten, die verwendet werden können, um den Datenstrom (32a, 32b, 32c) zu identifizieren, aus dem die erste Dateneinheit (41) verworfen wurde.

23. Einrichtung gemäß einem der Ansprüche 16 bis 22, wobei die Informationen, die durch die Speichereinrichtung (37) gespeichert wurden, einen Teil eines Paketkopfs enthalten.

## Revendications

1. Procédé de sélection d'une unité de données (42) à extraire d'une pluralité de flots de données (32a, 32b, 32c) qui doivent être multiplexés, chaque flot de données comprenant une pluralité d'unités de données (15, 41, 42), ledit procédé comprenant les étapes consistant à :
identifier une première unité de données (41) extraite d'un premier flot de données ;
stocker des informations relatives à ladite première unité ; et
sélectionner une deuxième unité de données (42) à extraire, ladite étape de sélection utilisant lesdites informations stockées de manière que ladite deuxième unité de données (42) soit sélectionnée à partir d'un flot de données autre que ledit premier flot de données de manière que ladite deuxième unité de données (42) ne soit pas consécutive à ladite première unité de données (41) dans ledit premier flot.

2. Procédé selon la revendication 1, comprenant en outre les étapes consistant à :
stocker des informations pour une pluralité d'unités extraites (41, 42) et utiliser lesdites informations relatives à la pluralité d'unités extraites (41, 42) dans ladite étape de sélection.

3. Procédé selon la revendication 1 ou 2, dans lequel chaque unité de données (41, 42) occupe un créneau successif (t1, t2) dans son flot de données associé et des créneaux respectifs (t1, t2) dans chaque flot de données sont sensiblement simultanés, ledit procédé comprenant en outre les étapes consistant à :
sélectionner au moins une unité de données (42) destinée à être perdue pour chaque créneau successif (t1, t2).

4. Procédé selon 1'une quelconque des revendications 1 à 3, comprenant en outre les étapes consistant à :
stocker consécutivement lesdites unités de données (41) d'au moins un flot de données (32a, 32b, 32c) dans une mémoire de données (37) ; et
sélectionner au moins une unité de données (42) à extraire quand ladite mémoire de données (37) est pleine et une nouvelle unité de données doit être stockée dans celle-ci.

5. Procédé selon l'une quelconque des revendications 1 à 4, comprenant en outre les étapes consistant à :
stocker consécutivement lesdites unités de données (41) d'au moins un flot de données (32a, 32b, 32c) dans une mémoire de données (37) ; et
sélectionner au moins une unité de données (42) à extraire avant que ladite mémoire de données (37) ne soit pleine et une nouvelle unité de données doit être stockée dans celle-ci.

6. Procédé selon l'une quelconque des revendications précédentes, comprenant en outre les étapes consistant à :
quand un paquet de données doit être perdu, sélectionner le deuxième paquet de données (42) à partir d'un flot de données prédéterminé (32a, 32b, 32c).

7. Procédé selon l'une quelconque des revendications précédentes, comprenant en outre les étapes consistant à :
déterminer une priorité de chacun de ladite pluralité de flots de données (32a, 32b, 32c) ;
sélectionner une unité (42) à extraire en tenant compte de la priorité des flots de données (32a, 32b, 32c).

8. Procédé selon l'une quelconque des revendications précédentes, dans lequel ladite étape de sélection amène une unité de données (42) à être perdue à partir de chacun desdits flots de données (32a, 32b, 32c) consécutivement.

9. Procédé selon l'une quelconque des revendications précédentes, dans lequel chaque unité de données (15, 41, 42) comprend un bloc d'identification de paquet comprenant une pluralité de bits qui indiquent comment l'unité de données (15, 41, 42) devrait être acheminée à travers un routeur (30) dans un système de télécommunication.

10. Procédé selon l'une quelconque des revendications précédentes, dans lequel ladite unité de données (15, 41, 42) comprend un paquet de données.

11. Procédé selon l'une quelconque des revendications précédentes, dans lequel lesdites informations comprennent une portion d'une adresse d'émetteur.

12. Procédé selon la revendication 10 ou 11, dans lequel lesdites informations comprennent une portion d'un bloc d'identification de paquet.

13. Procédé selon l'une quelconque des revendications 10 à 12, dans lequel lesdites informations comprennent une partie d'un bloc d'identification de paquet et certains autres identificateurs obtenus en analysant le paquet.

14. Procédé selon l'une quelconque des revendications 10 à 13, dans lequel lesdites informations comprennent un identificateur obtenu en analysant le paquet.

15. Procédé selon l'une quelconque des revendications précédentes, dans lequel lesdites informations comprennent des informations identifiant le flot (32a, 32b, 32c) à partir duquel l'unité de données a été extraite.

16. Dispositif de sélection d'unité de données pour sélectionner une unité de données (42) à extraire d'une pluralité de flots de données (32a, 32b, 32c) qui doivent être multiplexés, chaque flot de données comprenant une pluralité d'unités de données (15, 41, 42), ledit dispositif comprenant :
des moyens d'identification pour identifier une première unité de données (41) extraite d'un premier flot de données ;
un dispositif de stockage (37) pour stocker des informations relatives à ladite première unité (41) ; et
des moyens de sélection pour sélectionner une deuxième unité de données (42) à extraire en réponse auxdites informations stockées de manière que ladite deuxième unité de données (42) soit sélectionnée à partir d'un flot de données autre que ledit premier flot de données de manière que ladite deuxième unité de données (42) ne soit pas consécutive à ladite première unité de données (41) dans ledit premier flot.

17. Dispositif selon la revendication 16, comprenant en outre :
un tampon (35) comprenant des moyens de mémoire dans lesquels des unités de données (41, 42) peuvent être stockées ; dans lequel
des unités de données (41, 42) sont perdues sélectivement quand lesdits moyens de mémoire sont pleins.

18. Dispositif selon la revendication 16 ou la revendication 17, comprenant en outre :
un tampon (35) comprenant des moyens de mémoire dans lesquels des unités de données (41, 42) peuvent être stockées ; dans lequel
des unités de données (41, 42) sont perdues sélectivement avant que lesdits moyens de mémoire ne soient pleins.

19. Dispositif selon l'une quelconque des revendications 16 à 18, dans lequel chaque flot de données (32a, 32b, 32c) comprend une liaison de communication entre un émetteur et un récepteur dans un système de télécommunication.

20. Dispositif selon l'une quelconque des revendications 16 à 19, dans lequel lesdites informations comprennent une portion d'une adresse d'émetteur.

21. Dispositif selon l'une quelconque des revendications 16 à 21, dans lequel chaque unité de données (41, 42) comprend un bloc d'identification de paquet comprenant une pluralité de bits qui indiquent comment l'unité de données devrait être acheminée à travers un routeur (30) dans un système de télécommunication.

22. Dispositif selon l'une quelconque des revendications 16 à 21, dans lequel les informations stockées par le dispositif de stockage (37) comprennent au moins des données qui peuvent être utilisées pour identifier le flot (32a, 32b, 32c) à partir duquel la première unité de données (41) a été extraite.

23. Dispositif selon l'une quelconque des revendications 16 à 22, dans lequel les informations stockées par le dispositif de stockage (37) comprennent une partie d'un bloc d'identification.
